# EUROPÄISCHE PATENTSCHRIFT

(11) **EP 3 109 663 B1**
(45) Veröffentlichungstag und Bekanntmachung des Hinweises auf die Patenterteilung: **13.01.2021**
(21) Anmeldenummer: 16174751.4
(22) Anmeldetag: 16.06.2016
(51) Int. Cl.: G01S 7/41, G01S 13/42, G01S 13/931, G01S 13/72, G01S 7/02

(54) **VERFAHREN ZUM BETRIEB EINES FAHRERASSISTENZSYSTEMS EINES KRAFTFAHRZEUGS UND KRAFTFAHRZEUG**
METHOD FOR OPERATING A DRIVER ASSISTANCE SYSTEM OF A MOTOR VEHICLE AND MOTOR VEHICLE
PROCÉDÉ DESTINÉ AU FONCTIONNEMENT D'UN SYSTÈME D'ASSISTANCE DU CONDUCTEUR D'UN VÉHICULE AUTOMOBILE ET VÉHICULE AUTOMOBILE

(30) Priorität: 24.06.2015 DE 102015008154
(43) Veröffentlichungstag der Anmeldung: 28.12.2016
(73) Patentinhaber: AUDI AG, 85045 Ingolstadt (DE)
(72) Erfinder: Khlifi, Rachid, 85748 Garching (DE)

(56) Entgegenhaltungen:
- EP-A1- 2 461 305
- WO-A1-03/093914
- WO-A2-98/37705
- DE-A1- 19 944 542
- DE-A1-102004 059 395
- DE-A1-102013 018 753
- DE-A1-102015 001 386
- US-A1- 2015 153 444
- JRI LEE ET AL: "A Fully-Integrated 77-GHz FMCW Radar Transceiver in 65-nm CMOS Technology", IEEE JOURNAL OF SOLID-STATE CIRCUITS, Bd. 45, Nr. 12, 1. Dezember 2010 (2010-12-01), Seiten 2746-2756, XP055088008, ISSN: 0018-9200, DOI: 10.1109/JSSC.2010.2075250

## Beschreibung

Die Erfindung betrifft ein Verfahren zum Betrieb eines Fahrerassistenzsystems eines Kraftfahrzeugs, welches aus Sensordaten mehrerer Umgebungssensoren des Kraftfahrzeugs eine Kurveninformation einer vorausliegenden Kurve ermittelt und bei Erfüllung wenigstens eines die Kurveninformation auswertenden Maßnahmenkriteriums wenigstens eine Maßnahme zur Unterstützung des Fahrers einleitet. Daneben betrifft die Erfindung ein Kraftfahrzeug.

Für moderne Kraftfahrzeuge wurde eine Vielzahl von Fahrerassistenzsystemen vorgeschlagen, die die Fahrer in verschiedensten Situationen unterstützen können. Zur Bewertung der aktuellen Fahrsituation ist dabei die Umgebungswahrnehmung des eigenen Kraftfahrzeugs, welche durch Umgebungssensoren realisiert wird, äußerst relevant. Maßnahmenkriterien, die die Fahrsituation beschreibende Fahrsituationsdaten auswerten, bilden die Bewertung der Fahrsituation in den Funktionen des Fahrerassistenzsystems ab. Bei Erfüllung eines Maßnahmenkriteriums wird eine Maßnahme durchgeführt, beispielsweise eine Warnung des Fahrers ausgegeben, Betriebsparameter eines weiteren Fahrzeugsystems angepasst und/oder sogar Fahreingriffe vorgenommen, beispielsweise Bremseingriffe, um eine kritische Fahrsituation zu bereinigen.

Insbesondere wurden bereits Fahrerassistenzsysteme vorgeschlagen, die eine Unterstützung des Fahrers im Hinblick auf zu durchfahrende Kurven bieten sollen. Gerade bei höheren Geschwindigkeiten oder bei Nacht stellen vorausliegende enge Kurven eine potentiell kritische Fahrsituation dar. Dabei wurde vorgeschlagen, optische Umgebungssensoren, beispielsweise Kameras, zu nutzen, um Kurven frühzeitig zu erkennen und eine Kurveninformation zu ermitteln, die durch ein Maßnahmenkriterium ausgewertet werden kann. Beispielsweise kann das Kamerabild einer Kamera im Hinblick auf die Verläufe von die aktuelle Fahrspur und/oder die Straße begrenzenden Linien ausgewertet werden.

Dabei tritt jedoch der Nachteil auf, dass die Auswertung von Bilddaten einer Kamera oder eines sonstigen optischen Umgebungssensors stark von äußeren Einflüssen abhängig ist, insbesondere von den Wetterbedingungen, einer Verschmutzung des optischen Umgebungssensors und der Helligkeit der Umgebung. Das bedeutet, es existiert eine Vielzahl von Situationen, in denen eine Erfassung vorausliegender Kurven nicht hinreichend zuverlässig möglich ist.

Aus EP 2 461 305 A1 ist eine Straßenformerkennungsvorrichtung bekannt, mittels der die Form einer in Fahrtrichtung vor einem Fahrzeug liegenden Straße erfassbar ist. Hierzu werden Bilder, insbesondere hinsichtlich des Asphalts der Straße, ausgewertet. Die Straßenformerkennungsvorrichtung kann hierzu beispielsweise zwei Kameras oder eine Kamera und ein Radargerät umfassen.

Aus DE 199 44 542 A1 ist ein Verfahren zur Bestimmung des Streckenverlaufs einer vor einem Kraftfahrzeug liegenden Fahrstrecke bekannt. Dies erfolgt anhand der Erfassung von vor dem Kraftfahrzeug befindlichen Objekten mittels radarbasierten und unterschiedliche Winkelsektoren betreffenden Abtasteinheiten. Ein weiteres System, bei dem ein vor einem Kraftfahrzeug liegender Straßenverlauf anhand radarbasierter Daten ermittelt wird, ist aus WO 03/093914 A1 bekannt.

US 2015/153444 A1 betrifft ein Konzept, bei dem Objekte mittels eines Radarsensors einer Vorrichtung erfasst werden. Anhand der hieraus gewonnen Datenpunkte sowie der erfassten Position der Vorrichtung wird ein räumliches Modell der Objekte und der Vorrichtung generiert.

WO 98/37705 A2 offenbart einen spannungsgesteuerten Oszillator zur Übertragung eines Radiosignals, mittels dem eine Echtzeitsteuerung der Bandbreite und mittleren Frequenz eines modulierten Signals zur Verbesserung einer Entfernungs- und Geschwindigkeitsbestimmung eines entsprechend erfassten Objektes realisiert wird.

DE 10 2013 018 753 A1 betrifft ein Fahrzeug mit acht in CMOS-Technologie hergestellten Radarsensoren, die zur Realisierung einer 360°-Überwachung der Fahrzeugumgebung an unterschiedlichen Positionen angeordnet sind. Die Erfassungsbereiche überlappen sich dabei zur Realisierung von Redundanzbereichen.

Aus DE 10 2004 059 395 A1 ist eine Sende- und/oder Empfangseinrichtung für Radaranwendungen in einem Kraftfahrzeug bekannt, die einen Haltleiterchip umfasst, wobei der Halbleiterchip über Leadframes mit einem Schaltungsträger kontaktierbar ist und ein Teil der Leadframes als Antenne ausgebildet ist.

Der Erfindung liegt die Aufgabe zugrunde, ein gegenüber bekannten Systemen verbessertes Fahrerassistenzsystem, das eine verlässlichere, insbesondere von Wetter-, Verschmutzungs- und Helligkeitsbedingungen unabhängige Detektion vorausliegender Kurven ermöglicht.

Zur Lösung dieser Aufgabe ist bei einem Verfahren der eingangs genannten Art erfindungsgemäß vorgesehen, dass als Umgebungssensoren Radarsensoren mit jeweils einem einen Radartransceiver realisierenden Halbleiterchip, insbesondere CMOS-Chip, verwendet werden, deren Sensordaten zur Ermittlung der Kurveninformation ausgewertet werden, wobei aus den Sensordaten des Radarsensors der Verlauf wenigstens einer Fahrbahnbegrenzung anhand die Fahrbahnbegrenzung beschreibender Merkmale ermittelt wird, aus welchem die Kurveninformation ermittelt wird, und die Radarsensoren als Weitwinkel-Radarsensoren mit jeweils einer Antennenanordnung ausgestaltet sind, wobei die Antennenanordnung eine Winkelmessung in wenigstens zwei zueinander senkrechten Ebenen, insbesondere in Azimut und Elevation, erlaubt, wobei mehrere auf das Vorfeld des Kraftfahrzeugs gerichtete Radarsensoren mit wenigstens teilweise überlappenden Erfassungsbereichen verwendet werden, deren Sensordaten zumindest in dem jeweiligen Überlappungsbereich gemeinsam zur Ermittlung der Kurveninformation mittels einer Kombination der Sensordaten aus dem jeweiligen Überlappungsbereich zu einer gegenseitigen Plausibilisierung und/oder zu einer statistischen Verarbeitung, die der Erhöhung der Datenqualität dient, ausgewertet werden, wobei die auf das Vorfeld gerichteten Radarsensoren Teil einer eine 360°-Umgebungsüberwachung ermöglichen Radarsensoranordnung mit insbesondere acht Radarsensoren sind, wobei Sensordaten wenigstens eines auf die seitliche Umgebung des Kraftfahrzeugs gerichteten Radarsensors zur Ermittlung einer Abstandsinformation zur Fahrbahnbegrenzung ausgewertet werden, welche in wenigstens einem des wenigstens einen Maßnahmenkriteriums berücksichtigt wird.

Es wird mithin vorgeschlagen, die Ermittlung des zukünftigen Straßenverlaufs und somit die Ermittlung von Kurveninformationen aufgrund der Sensordaten wenigstens eines hochauflösenden Radarsensors durchzuführen, der in Halbleitertechnologie, bevorzugt CMOS-Technologie, realisiert ist. Es wird mithin ausgenutzt, dass im Rahmen der technischen Entwicklung inzwischen kompakt realisierbare, dennoch jedoch eine hohe Sensordatenqualität aufweisende Radarsensoren bekannt geworden sind, deren hohe Auflösung es insbesondere ermöglicht, einzelne Reflektionen am Rand der befahrenen Straße so dicht beieinander zu messen, dass der Verlauf der Straße bewertet werden kann. Besonders bevorzugt ist es dabei im Rahmen der vorliegenden Erfindung, wenn eine Abstandsauflösung kleiner als 5 cm durch den Radarsensor möglich ist, beispielsweise von 3,75 cm in einem im Folgenden noch näher beschriebenen Ausführungsbeispiel.

Mithin ist es durch die Auswertung der Sensordaten des wenigstens einen Radarsensors möglich, Kurven im Straßenverlauf festzustellen und deren Eigenschaften, beschrieben durch die Kurveninformation, zu bestimmen. Nachdem Radarstrahlung auch Schmutz durchdringen kann, bevorzugt jedoch die Radarsensoren im Kraftfahrzeug ohnehin verdeckt verbaut werden, ist mithin eine verlässliche Detektion von Kurven unabhängig vom Verschmutzungszustand gegeben. Ferner ist die Radardetektion kaum abhängig von Wetter- und Helligkeitssituationen, so dass mithin die hauptsächlichen Nachteile optischer Umgebungswahrnehmung im Rahmen des erfindungsgemäßen Verfahrens nicht länger gegeben sind. Ein weiterer Vorteil der vorliegenden Erfindung ist es, dass Radarsensoren eine höhere Reichweite als beispielsweise Kameras aufweisen können. Kritische, enge Kurven können frühzeitig erkannt werden und es können rechtzeitig Maßnahmen eingeleitet werden. Dabei sei nochmals angemerkt, dass eine hinreichende Ortsauflösung erst mit Verwendung moderner Radarsensoren, die auf Halbleitertechnologie basieren, überhaupt möglich ist.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Mithin ist es auch im Rahmen der vorliegenden Erfindung bevorzugt, wenn durch den Halbleiter auch eine digitale Signalverarbeitungskomponente und/oder eine Steuereinheit des Radarsensors realisiert werden und/oder der Halbleiterchip und eine Antennenanordnung des Radarsensors als ein Package realisiert sind. Im Rahmen einer derartigen Hochintegration ist nicht nur durch die kurzen Signalwege ein deutlich verbessertes Signal-zu-Rauschverhältnis gegeben, sondern es erschließen sich auch Betriebsparameter, die einem hochauflösenden Betrieb zur Kurvendetektion zuträglich sind.

So sieht eine besonders vorteilhafte Weiterbildung der vorliegenden Erfindung vor, dass der Radarsensor in einem Frequenzbereich von 77 bis 81 GHz und/oder mit einer Frequenzbandbreite von mehr als 1 GHz, insbesondere 4 GHz, betrieben wird. Die Frequenzbandbreite bestimmt letztlich die Trennfähigkeit für die Reflexionen, also die Abstandsauflösung, mit anderen Worten auch die Größe einer Auflösungszelle. So ist es im Rahmen eines hochintegrierten, auf CMOS-Technologie basierenden Radarsensors bei einer Frequenzbandbreite von 4 GHz möglich, eine Ortsauflösung im Bereich von 3 bis 4 cm, beispielsweise 3,75 cm, auch auf größere Distanzen zu erreichen.

Ein weiter deutlich verbessertes Abbild der Umgebung, insbesondere des hier relevanten Vorfelds, des Kraftfahrzeugs durch den wenigstens einen Radarsensor liegt vor, da dieser erfindungsgemäß eine Antennenanordnung aufweist, die eine Winkelmessung in wenigstens zwei zueinander senkrechten Ebenen, insbesondere in Azimut und Elevation, erlaubt. Beispielsweise wurden auf CMOS-Technologie basierende Weitwinkel-Radarsensoren vorgeschlagen, die eine Winkelabdeckung von 150° im Azimut und 100° in der Elevation aufweisen. Um dies zu ermöglichen, kann die Antennenanordnung beispielsweise in einer ersten Richtung aufeinander folgend angeordnete Antennenelemente aufweisen, die um wenigstens ein in einer dazu senkrechten zweiten Richtung angrenzendes weiteres Antennenelement ergänzt sind.

Erfindungsgemäß ist ferner vorgesehen, dass mehrere auf das Vorfeld des Kraftfahrzeugs gerichtete Radarsensoren mit wenigstens teilweise überlappenden Erfassungsbereichen verwendet werden, deren Sensordaten zumindest in dem Überlappungsbereich gemeinsam ausgewertet werden. Weist das Kraftfahrzeug beispielsweise im Bereich des vorderen Stoßfängers drei Radarsensoren auf, können deren Sensordaten fusioniert betrachtet werden, um eine hochqualitative Bewertung des Straßenverlaufs und mithin eine verlässliche Ermittlung von Kurveninformationen durchzuführen. Insbesondere ist es in diesem Kontext denkbar, Sensordaten unterschiedlicher Sensoren, die das gleiche Objekt und/oder den gleichen Unterbereich betreffen, zur gegenseitigen Plausibilisierung und/oder durch statistische Verarbeitung zur Erhöhung der Datenqualität zu kombinieren.

Erfindungsgemäß ist in diesem Kontext auch vorgesehen, dass die auf das Vorfeld gerichteten Radarsensoren Teil einer eine 360°-Umgebungsüberwachung ermöglichenden Radarsensoranordnung mit insbesondere acht Radarsensoren sind, wobei Sensordaten wenigstens eines auf die seitliche Umgebung des Kraftfahrzeugs gerichteten Radarsensors zur Ermittlung einer Abstandsinformation zur Fahrbahnbegrenzung ausgewertet werden, welche in wenigstens einem des wenigstens einen Maßnahmenkriteriums berücksichtigt wird. Derartige, eine Überwachung der Umgebung des Kraftfahrzeugs in einem 360°-Winkelintervall erlaubende Radarsensoranordnungen wurden bereits vorgeschlagen, wobei nicht nur die insbesondere drei nach vorne ausgerichteten Radarsensoren Berücksichtigung finden können, sondern auch, insbesondere hinsichtlich einer Bestimmung der Querposition des Kraftfahrzeugs auf der Straße, Sensordaten der seitlichen Radarsensoren herangezogen werden können, um den lateralen Abstand des Kraftfahrzeugs relativ zur Fahrbahnbegrenzung, beispielsweise zur Randbebauung, zu messen. Eine derartige Abstandsinformation stellt eine nützliche weitere Eingangsgröße bei der Bewertung der aktuellen Fahrsituation im Hinblick auf die bevorstehende Kurve dar. Auch bei einer solchen Bestimmung einer Querpositionsinformation eines Kraftfahrzeugs wird letztlich die Fahrbahnbegrenzung (Straßenberandung) vermessen, so dass entsprechende Auswertungsalgorithmen zur Ermittlung der Abstandsinformation und der Kurveninformation eingesetzt werden können. Insbesondere sei in diesem Kontext auch auf die nachveröffentlichte DE 10 2015 001 386 der Anmelderin verwiesen, in der eine solche Querpositionsbestimmung vorgenommen wird.

In konkreter Ausgestaltung des Verfahrens kann vorgesehen sein, dass aus den Sensordaten des Radarsensors der Verlauf wenigstens einer Fahrbahnbegrenzung anhand die Fahrbahnbegrenzung beschreibender Merkmale ermittelt wird, aus welchem die Kurveninformation ermittelt wird. Mithin wird vorgeschlagen, durch Auswertung der Sensordaten des wenigstens einen Radarsensors die Lage einer Fahrbahnbegrenzung beschreibende Umgebungsmerkmale detektiert und lokalisiert werden, aus denen ein Verlauf der Fahrbahnbegrenzungen der Fahrbahn, mithin der Straße, und insbesondere, wie oben dargelegt, beispielsweise auch Lateralabstände des Kraftfahrzeugs zu den Fahrbahnbegrenzungen ermittelt werden können. Insbesondere kann vorgesehen sein, dass als Merkmale Randbebauungsobjekte, insbesondere Leitplanken und/oder Bordsteine und/oder Baken und/oder Verkehrsschilder und/oder Leitpfosten, und/oder ein Übergang von dem Fahrbahnbelag, insbesondere Asphalt, zu einem anderen Untergrund klassifiziert und räumlich verortet werden. Aufgrund der Genauigkeit der Daten des Radarsensors ist es in einer Auswertung möglich, Umgebungsmerkmale zu klassifizieren und somit rückzuschließen, ob es sich beispielsweise um ein Objekt handelt, das sich zwangsläufig nicht auf der Fahrbahn befinden kann, mithin ein Hinweis auf die Fahrbahnbegrenzung sein muss. Idealerweise ist es sogar möglich, wenn hochintegrierte, hochauflösende Radarsensoren verwendet werden, den Übergang vom Fahrbahnbelag zu einem anderen Untergrund selbst zu detektieren, so dass unmittelbar die Fahrbahnbegrenzung abgeleitet werden kann. Idealerweise werden dabei die Umgebungsmerkmale über einen bestimmten Zeitraum, in dem sich das Kraftfahrzeug ihm nähert, betrachtet, um ein möglichst genaues Maß für die Lage der Fahrbahnbegrenzungen zu erhalten. Ist erst die Lage der Fahrbahnbegrenzungen bekannt, kann hieraus die Kurveninformation entsprechend abgeleitet werden. Zusammenfassend kann also durch Detektion und Bewertung von Sensordaten des wenigstens einen Radarsensors zur Straße und den Randobjekten bzw. Randmerkmalen eine Aussage über den Verlauf der Fahrbahnbegrenzung, insbesondere links und rechts, getroffen werden, aus denen sich das Vorhandensein und Eigenschaften von Kurven ergeben.

Dabei sei angemerkt, dass es auch denkbar ist, eine hochqualitative Ermittlung der Kurveninformation auch ausschließlich mit einem hochauflösenden Radarsystem mit mehreren Radarsensoren zu ermitteln, ohne dass eine Bildverarbeitung von Bilddaten eines optischen Sensors oder verwandte Technologien eingesetzt werden müssen.

Als Kurveninformation kann insbesondere ein Kurvenradius und/oder eine Krümmung ermittelt werden. Dies ist insbesondere dann zweckmäßig, wenn ein Maßnahmenkriterium bei Unterschreitung eines Radiusschwellwerts und/oder Krümmungsschwellwerts, bevorzugt eines in Abhängigkeit der Geschwindigkeit des Kraftfahrzeugs dynamisch anpassbaren Radiusschwellwerts- und/oder Krümmungsschwellwerts, erfüllt ist. Als Maßnahme kann dann beispielsweise eine Warnung an den Fahrer ausgegeben werden. Warnungen im Allgemeinen können im Rahmen der vorliegenden Erfindung optisch und/oder akustisch und/oder haptisch ausgegeben werden, wofür entsprechende Ausgabemittel vorzusehen sind.

Vorzugsweise kann im Rahmen wenigstens eines Maßnahmenkriteriums, insbesondere wenigstens in Abhängigkeit der Kurveninformation, der Abstandsinformation zum Straßenrand und einer aktuellen Geschwindigkeit des Kraftfahrzeugs, ein die Kritikalität der aktuellen, auf das Durchfahren der vorausliegenden Kurve bezogenen Fahrsituation beschreibender Kritikalitätswert ermittelt werden, bei dessen Erfüllung als Maßnahme eine Warnung an den Fahrer ausgegeben und/oder ein Fahrzeugsystem, insbesondere ein Bremssystem und/oder ein Sicherheitssystem, vorkonditioniert und/oder wenigstens ein Fahreingriff, insbesondere zur Reduzierung der Geschwindigkeit, durchgeführt und/oder ein Fahrzeugführungssystem, insbesondere ein Längsführungssystem, reparametriert wird. Beispielsweise kann also vorgesehen sein, dass anhand einer Abstandsinformation zur Fahrbahnbegrenzung, des bevorstehenden Kurvenverlaufs (also der Kurveninformation) der Straße und der Ego-Geschwindigkeit des Kraftfahrzeugs die Kritikalität der aktuellen Fahrsituation hinsichtlich der Kurven bewertet wird. Selbstverständlich können auch weitere Informationen in die Fahrsituationsanalyse eingebracht werden, beispielsweise Informationen zu anderen Verkehrsteilnehmern, Informationen zu Hindernissen und dergleichen. Ist das Maßnahmenkriterium erfüllt, bietet sich je nach konkretem Anwendungsfall die gesamte Palette möglicher konkreter Maßnahmen an. So kann beispielsweise eine Vorkonditionierung eines Bremssystems, beispielsweise eine vorzeitige Befüllung, vorgesehen sein, wenn kritische Kurven erkannt werden, damit ein schnelleres Bremsen möglich wird. Ähnlich können passive und/oder aktive Sicherheitssysteme vorkonditioniert werden, beispielsweise durch die Vorbereitung von Airbags auf einen möglichen Unfall und dergleichen. In einem weiteren Anwendungsfall kann auch vorgesehen sein, dass bei einem Längsführungssystem, beispielsweise einer Geschwindigkeitsregelanlage (GRA) oder einem ACC-System, die Regelgeschwindigkeit automatisch an die mit dem hochauflösenden Radar detektierten, vorausliegenden Kurven anzupassen.

Es sei an dieser Stelle noch angemerkt, dass im Rahmen der vorliegenden Erfindung bevorzugt langreichweitige Radarsensoren eingesetzt werden, insbesondere solche, deren Reichweite größer als 60 m ist. So kann bereits deutlich im Voraus die Kurveninformation ermittelt und den Fahrer unterstützend im Fahrerassistenzsystem verwendet werden.

Neben dem Verfahren betrifft die Erfindung auch ein Kraftfahrzeug, aufweisend ein Fahrerassistenzsystem mit einem zur Durchführung des erfindungsgemäßen Verfahrens ausgebildeten Steuergerät sowie den wenigstens einen Radarsensor. Sämtliche Ausführungen zum erfindungsgemäßen Verfahren lassen sich analog auf das erfindungsgemäße Kraftfahrzeug übertragen, mit welchem ebenso die bereits genannten Vorteile erhalten werden können.

Insbesondere kann, wie bereits dargelegt wurde, vorgesehen sein, dass die Radarsensoren verdeckt in dem Kraftfahrzeug verbaut sind. So kann beispielsweise bei der Verwendung von mehreren, insbesondere die Umgebung des Kraftfahrzeugs in einem 360°-Winkelbereich abdeckenden Radarsensoren vorgesehen sein, jeweils einen Teil der Radarsensoren in einem vorderen und hinteren Stoßfänger des Kraftfahrzeugs zu verbauen, wo die Radarstrahlung problemlos das Stoßfängermaterial durchdringen kann. Für seitlich ausgerichtete Radarsensoren kann vorgesehen sein, dass diese beispielsweise in Türen des Kraftfahrzeugs verbaut werden, wobei in dem Türblech eine mit einem Radar durchlässigen Material zu füllende Durchlassöffnung für die Radarstrahlung geschaffen werden kann, welche mit der Tür lackiert wird und so von außen nicht mehr erkennbar ist.

Weitere Vorteile und Einzelheiten der vorliegenden Erfindung ergeben sich aus den im folgenden beschriebenen Ausführungsbeispielen sowie anhand der Zeichnungen. Dabei zeigen:
- Fig. 1: ein Ausführungsbeispiel eines im Rahmen der Erfindung verwendbaren Radarsensors,
- Fig.2: ein erfindungsgemäßes Kraftfahrzeug,
- Fig. 3: einen Ablaufplan eines Ausführungsbeispiels des erfindungsgemäßen Verfahrens, und
- Fig. 4: eine Fahrsituation.

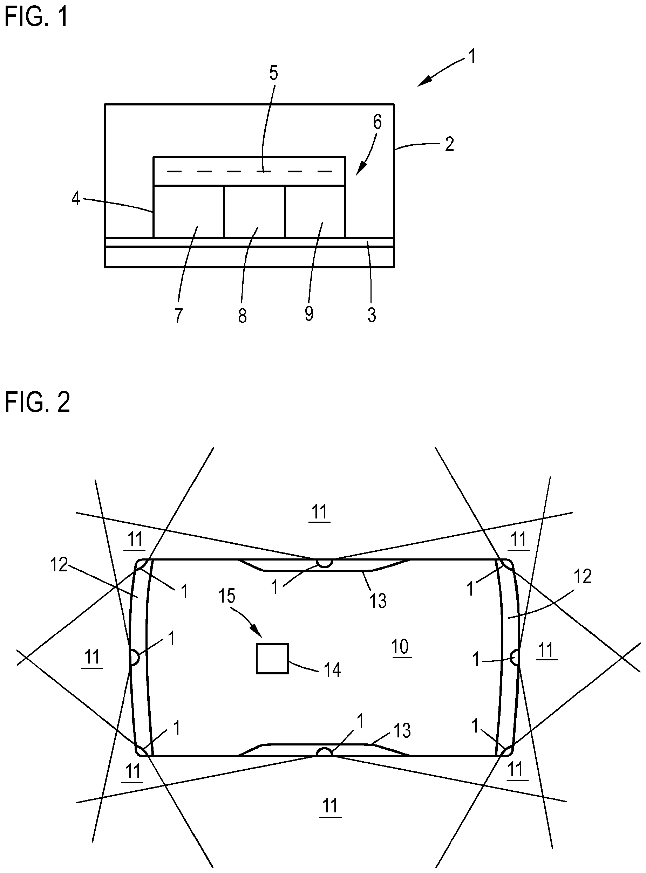

Fig. 1 zeigt einen Radarsensor 1 auf CMOS-Basis, wie er im erfindungsgemäßen Verfahren verwendet werden kann. Der Radarsensor 1 weist ein Gehäuse 2 auf, in dem eine Leiterplatte 3 gehaltert ist. Auf der Leiterplatte 3 ist ein Halbleiterchip 4, hier ein CMOS-Chip, angeordnet, der zusammen mit einer Antennenanordnung 5 des Radarsensors 1 ein Package bildet. Durch den Halbleiterchip 4 werden neben einem Radartransceiver 7 auch eine digitale Signalverarbeitungskomponente 8 (DSP) und eine Steuereinheit des Radarsensors 1 realisiert. Derartige Radarsensoren lassen sich äußerst kleinbauend realisieren und ermöglichen eine hochauflösende Abtastung der Umgebung auch bei größeren Abständen. Auch ein Betrieb bei hohen Frequenzen der Radarstrahlung sowie hohe Frequenzbandbreiten lasse sich erzielen, was weiter der Leistungsfähigkeit bei der hochauflösenden Umgebungsabtastung zuträglich ist. Vorliegend werden die Radarsensoren 1 des im Folgenden noch zu beschreibenden Kraftfahrzeugs mit einer Frequenzbandbreite von 4 GHz im Frequenzbereich von 77 bis 81 GHz betrieben, was eine hervorragende Abstandsauflösung ermöglicht.

Die Radarsensoren 1 können sehr klein realisiert werden, beispielsweise mit einer Größe von 3 cm mal 3 cm oder kleiner. Sie lassen sich dementsprechend Bauraum sparend verdeckt im Kraftfahrzeug verbauen. Zweckmäßigerweise ist die Antennenanordnung 5 ausgebildet, eine Winkelauflösung in zwei Richtungen zu ermöglichen, hier im Azimut und in der Elevation, so dass Merkmale, die durch Reflexionen vermessen werden, in ihrer dreidimensionalen Dimension im Raum zugeordnet werden können. Bei den Radarsensoren 1 handelt es sich zweckmäßig um Weitwinkel-Radarsensoren und sie weisen eine Reichweite von >60 m auf. Die Abstandsauflösung hingegen ist kleiner als 5 cm realisiert.

Fig. 2 zeigt eine Prinzipskizze eines erfindungsgemäßen Kraftfahrzeugs 10, bei dem unter Nutzung von acht Radarsensoren 1 eine 360°-Abtastung der Umgebung des Kraftfahrzeugs 10 erreicht werden kann. Zur Veranschaulichung sind die Erfassungsbereiche 11 der Radarsensoren 1, die als Weitwinkel-Radarsensoren ausgebildet sind, gezeigt. Überlappungsbereiche werden genutzt, um die Radardaten gegeneinander zu plausibilisieren und/oder statistisch zur Verbesserung der Genauigkeit zu kombinieren.

Jeweils drei der Radarsensoren 1 sind in den vorderen und den hinteren Stoßfängern 12 des Kraftfahrzeugs 10 verdeckt verbaut, wobei die das seitliche Umfeld abtastenden Radarsensoren 1 in Türen 13, ebenso verdeckt, vorgesehen sind. Nachdem Stoßfänger 12 meist ohnehin aus einem für Radarstrahlung durchlässigen Material bestehen, ist es bei den Türen 13 denkbar, entsprechende Fenster in Blechteilen vorzusehen und durch ein radardurchlässiges Material zu überdecken, welches überlackiert wird, so dass der Radarsensor 1 von außen nicht sichtbar ist. Das ferner gezeigte Steuergerät 14 ist zur Durchführung des erfindungsgemäßen Verfahrens ausgebildet und einem Fahrerassistenzsystem 15 zugeordnet, das den Fahrer bei Kurvenfahrten unterstützen soll.

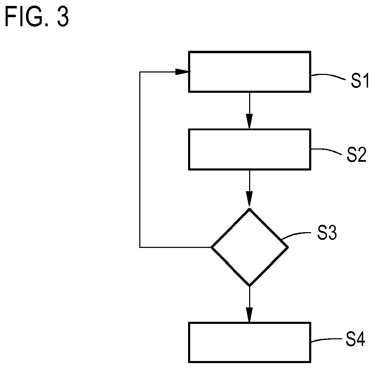

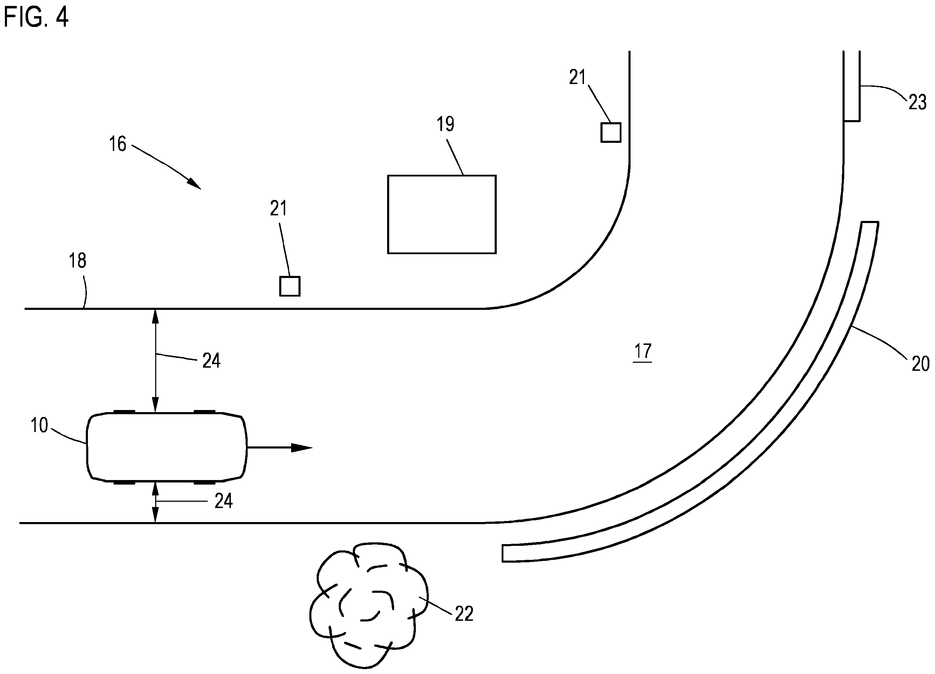

Ein Ausführungsbeispiel des erfindungsgemäßen Verfahrens soll nun im Hinblick auf die Figuren 3 und 4 näher erläutert werden.

Dabei werden in einem Schritt S1 Sensordaten der Radarsensoren 1 aufgenommen, die im Folgenden näher ausgewertet werden sollen. Konkret werden in einem Schritt S2 die Sensordaten der auf das Vorfeld gerichteten, im vorderen Stoßfänger 12 angeordneten Radarsensoren 1 ausgewertet, um Kurveninformationen zu vorausliegenden Kurven zu ermitteln.

Hierzu werden aus den Sensordaten Umfeldmerkmale extrahiert, die die Lage der Begrenzung der Fahrbahn, auf der das Kraftfahrzeug 10 betrieben wird, anzeigen, und in ihrer Gesamtheit mithin deren Verlauf wiedergeben.

Zur genaueren Erläuterung ist in Fig. 4 das Kraftfahrzeug 10 beispielhaft auf einer Straße 16 gezeigt, die eine vor dem Kraftfahrzeug 10 liegende Kurve 17 beschreibt. Ein wichtiges Umgebungsmerkmal, das in den Sensordaten der Radarsensoren 1, die hochauflösend genug sind, detektiert werden kann, ist dabei der Übergang 18 vom Fahrbahnbelag zu einem anderen Untergrund, welcher die besten Hinweise auf den Verlauf der Fahrbahnbegrenzung bietet. Jedoch geben auch weitere Umgebungsmerkmale Hinweise auf den Verlauf bzw. die Lage der Fahrbahnbegrenzung, beispielsweise Randbebauungsobjekte 19, Leitplanken 20, Leitpfosten 21, neben der Straße befindliche Pflanzen 22 und gegebenenfalls vorhandene Bordsteine 23.

Nachdem all diese Umgebungsmerkmale in den Radardaten identifiziert und lokalisiert werden können, lässt sich aus ihnen ein Verlauf der Fahrbahnbegrenzung ableiten, was im Schritt S2 geschieht. Ist der Verlauf der Fahrbahnbegrenzung vor dem Kraftfahrzeug 10 aber erst bekannt, ergibt sich unmittelbar, ob eine Kurve 17 vorliegt und es können deren Eigenschaften, beispielsweise der Kurvenradius und/oder die Krümmung, als Kurveninformation abgeleitet werden. Zusätzlich können Sensordaten der seitlichen Radarsensoren 1 genutzt werden, um auf die Querposition des Kraftfahrzeugs 10 auf der Straße 16 zu bestimmen, insbesondere also die Lateralabstände 24 zur Fahrbahnbegrenzung.

In einem Schritt S3 werden die ermittelten Kurveninformationen durch wenigstens ein Maßnahmenkriterium ausgewertet, wobei vorliegend wenigstens eines der Maßnahmenkriterien die die Lateralabstände 24 beschreibende Abstandsinformation, die Kurveninformation und die aktuelle Geschwindigkeit des Kraftfahrzeugs nutzt, um einen die Kritikalität der aktuellen Fahrsituation beschreibenden Kritikalitätswert zu ermitteln. Selbstverständlich können dabei auch weitere Informationen über die Umgebung des Kraftfahrzeugs 10 berücksichtigt werden, beispielsweise Informationen über andere Verkehrsteilnehmer, die zumindest teilweise auch durch die Radarsensoren 1 erfasst worden sind.

Überschreitet der Kritikalitätswert einen Schwellwert, ist das wenigstens eine des wenigstens einen Maßnahmenkriteriums erfüllt und es werden in einem Schritt S4 die entsprechenden Maßnahmen vorgenommen. Dabei können, je nach Fahrsituation und Maßnahmenkriterium, unterschiedliche Arten von Maßnahmen in Betracht kommen, beispielsweise eine akustische und/oder optische und/oder haptische Warnung des Fahrers, eine Anpassung von Betriebsparametern anderer Fahrzeugsysteme, insbesondere also eine Vorkonditionierung von einem Bremssystem und/oder wenigstens einem Sicherheitssystem und/oder eine Reparametrierung von Fahrzeugführungssystemen, insbesondere Längsführungssystemen, sowie Fahreingriffe selbst. Auf diese Weise kann der Fahrer adäquat unterstützt werden. Nähert er sich einer Kurve beispielsweise zu schnell, kann, insbesondere neben einer Warnung, durch ein Bremseingriff die Geschwindigkeit reduziert werden und/oder die Regelgeschwindigkeit eines Längsführungssystems kann angepasst werden.

## Patentansprüche

1. Verfahren zum Betrieb eines Fahrerassistenzsystems eines Kraftfahrzeugs (10), welches aus Sensordaten mehrerer Umgebungssensoren des Kraftfahrzeugs (10) eine Kurveninformation einer vorausliegenden Kurve (17) ermittelt und bei Erfüllung wenigstens eines die Kurveninformation auswertenden Maßnahmenkriteriums wenigstens eine Maßnahme zur Unterstützung des Fahrers einleitet,
**dadurch gekennzeichnet,**
**dass** als Umgebungssensoren Radarsensoren (1) mit jeweils einem einen Radartransceiver (7) realisierenden Halbleiterchip (4), insbesondere CMOS-Chip (4), verwendet werden, deren Sensordaten zur Ermittlung der Kurveninformation ausgewertet werden, wobei aus den Sensordaten des Radarsensors (1) der Verlauf wenigstens einer Fahrbahnbegrenzung anhand die Fahrbahnbegrenzung beschreibender Merkmale ermittelt wird, aus welchem die Kurveninformation ermittelt wird, und die Radarsensoren (1) als Weitwinkel-Radarsensoren (1) mit jeweils einer Antennenanordnung (5) ausgestaltet sind, wobei die Antennenanordnung (5) eine Winkelmessung in wenigstens zwei zueinander senkrechten Ebenen, insbesondere in Azimut und Elevation, erlaubt, wobei mehrere auf das Vorfeld des Kraftfahrzeugs (10) gerichtete Radarsensoren (1) mit wenigstens teilweise überlappenden Erfassungsbereichen (11) verwendet werden, deren Sensordaten zumindest in dem jeweiligen Überlappungsbereich gemeinsam zur Ermittlung der Kurveninformation mittels einer Kombination der Sensordaten aus dem jeweiligen Überlappungsbereich zu einer gegenseitigen Plausibilisierung und/oder zu einer statistischen Verarbeitung, die der Erhöhung der Datenqualität dient, ausgewertet werden, wobei die auf das Vorfeld gerichteten Radarsensoren (1) Teil einer eine 360°-Umgebungsüberwachung ermöglichen Radarsensoranordnung mit insbesondere acht Radarsensoren (1) sind, wobei Sensordaten wenigstens eines auf die seitliche Umgebung des Kraftfahrzeugs (10) gerichteten Radarsensors (1) zur Ermittlung einer Abstandsinformation zur Fahrbahnbegrenzung ausgewertet werden, welche in wenigstens einem des wenigstens einen Maßnahmenkriteriums berücksichtigt wird.

2. Verfahren nach Anspruch 1,
**dadurch gekennzeichnet,**
**dass** durch den Halbleiterchip (4) auch eine digitale Signalverarbeitungskomponente (8) und/oder eine Steuereinheit (9) des Radarsensors (1) realisiert werden und/oder der Halbleiterchip (4) und die Antennenanordnung (5) des Radarsensors (1) als ein Package (6) realisiert sind.

3. Verfahren nach Anspruch 1 oder 2,
**dadurch gekennzeichnet,**
**dass** der Radarsensor (1) in einem Frequenzbereich von 77 bis 81 GHz und/oder mit einer Frequenzbandbreite von mehr als 1 GHz, insbesondere 4 GHz, betrieben wird.

4. Verfahren nach einem der vorangehenden Ansprüche,
**dadurch gekennzeichnet,**
**dass** als Merkmale Randbebauungsobjekte (19), insbesondere Leitplanken (20) und/oder Bordsteine (23) und/oder Baken und/oder Verkehrsschilder und/oder Leitpfosten (21), und/oder ein Übergang (18) von dem Fahrbahnbelag, insbesondere Asphalt, zu einem sonstigen Untergrund klassifiziert und räumlich verortet werden.

5. Verfahren nach einem der vorangehenden Ansprüche,
**dadurch gekennzeichnet,**
**dass** als Kurveninformation ein Kurvenradius und/oder eine Krümmung ermittelt wird.

6. Verfahren nach einem der vorangehenden Ansprüche,
**dadurch gekennzeichnet,**
**dass** im Rahmen wenigstens eines Maßnahmenkriteriums, insbesondere wenigstens in Abhängigkeit der Kurveninformation, der Abstandsinformation zur Fahrbahnbegrenzung und einer aktuellen Geschwindigkeit des Kraftfahrzeugs (10), ein die Kritikalität der aktuellen, auf das Durchfahren der vorausliegenden Kurve (17) bezogenen Fahrsituation beschreibender Kritikalitätswert ermittelt wird, bei dessen Erfüllung als Maßnahme eine Warnung an den Fahrer ausgegeben und/oder ein Fahrzeugsystem, insbesondere ein Bremssystem und/oder ein Sicherheitssystem, vorkonditioniert und/oder wenigstens ein Fahreingriff, insbesondere zur Reduzierung der Geschwindigkeit, durchgeführt und/oder ein Fahrzeugführungssystem, insbesondere ein Längsführungssystem, reparametriert wird.

7. Kraftfahrzeug (10), aufweisend ein Fahrerassistenzsystem (15) mit einem zur Durchführung eines Verfahrens nach einem der vorangehenden Ansprüche ausgebildeten Steuergerät (14).

8. Kraftfahrzeug nach Anspruch 7,
**dadurch gekennzeichnet,**
**dass** die Radarsensoren (1) verdeckt in dem Kraftfahrzeug (10) verbaut sind.

## Claims

1. Method for operating a driver assistance system of a motor vehicle (10), which from sensor data of a plurality of environment sensors of the motor vehicle (10) determines curve information about an upcoming curve (17) and if at least one measure criterion evaluating the curve information is met introduces at least one measure for supporting the driver,
**characterised in that**
as environment sensors radar sensors (1) are used, each with a semiconductor chip (4), in particular CMOS-chip (4), implementing a radar transceiver (7), the sensor data of which are evaluated for determining the curve information, wherein from the sensor data of the radar sensor (1) the course of at least one road boundary is determined by means of the features describing the road boundary, from which the curve information is determined, and the radar sensors (1) as wide angle radar sensors (1) are provided respectively with an antenna arrangement (5), wherein the antenna arrangement (5) permits an angle measurement in at least two perpendicular planes, in particular in azimuth and elevation, wherein a plurality of radar sensors (1) directed to the forefield of the motor vehicle (10) are used with at least partly overlapping detecting areas (11), the sensor data of which are evaluated at least in the respective overlapping areas jointly for determining the curve information by means of a combination of sensor data from the respective overlapping area for a mutual plausibility check and/or statistical processing, which is used for increasing the data quality, wherein the radar sensors (1) directed to the forefield are part of a radar sensor arrangement enabling 360° environment monitoring with in particular weight radar sensors (1), wherein sensor data of at least one radar sensor (1) directed to the lateral environment of the motor vehicle (10) are evaluated for determining distance information to the road boundary, which is considered in at least one of the at least one measure criterion.

2. Method according to claim 1,
**characterised in that**
by means of the semiconductor chip (4) also a digital signal processing component (8) and/or a control unit (9) of the radar sensor (1) are implemented and/or the semiconductor chip (4) and the antenna arrangement (5) of the radar sensor (1) are implemented as a package (6).

3. Method according to claim 1 or 2,
**characterised in that**
the radar sensor (1) is operated in a frequency range of 77 to 81 GHz and/or at a frequency bandwidth of more than 1 GHz, in particular 4 GHz.

4. Method according to any of the preceding claims,
**characterised in that**
as features roadside structures (19), in particular crash barriers (20) and/or kerbs (23) and/or beacons and/or traffic signs and/or reflectors posts (21), and/or a transition (18) from the road surface, in particular asphalt, to another surface are classified and spatially located.

5. Method according to any of the preceding claims,
**characterised in that**
a curve radius and/or a curvature is determined as curve information.

6. Method according to any of the preceding claims,
**characterised in that**
as part of at least one measure criterion, in particular at least as a function of the curve information, the distance information to the road boundary and a current speed of the motor vehicle (10), a criticality value describing the criticality of the current driving situation relating to driving around the upcoming curve (17) is determined, which when fulfilled as a measure a warning is output to the driver and/or a vehicle system is preconditioned, in particular a braking system and/or a safety system, and/or at least one drive intervention is performed, in particular for reducing the speed, and/or a vehicle guidance system, in particular a longitudinal guidance system, is reparameterised.

7. Motor vehicle (10) having a driver assistance system (15) with a control unit (14) configured to perform a method according to any of the preceding claims.

8. Motor vehicle according to claim 7,
**characterised in that**
the radar sensors (1) are installed concealed in the motor vehicle (10).

## Revendications

1. Procédé destiné au fonctionnement d'un système d'assistance du conducteur d'un véhicule automobile (10) qui détermine à partir de données de capteurs de plusieurs capteurs de l'environnement du véhicule (10) une information de virage d'un virage à venir (17) et qui entraîne lorsqu'est rempli au moins un critère de mesure évaluant l'information de virage au moins une mesure pour assister le conducteur,
**caractérisé en ce que**
des capteurs radar (1) comportant respectivement une puce semi-conductrice (4) réalisant un émetteur-récepteur de radar (7), en particulier une puce CMOS (4) sont utilisés en tant que capteurs d'environnement, dont les données de capteur sont évaluées pour déterminer l'informations de virage, dans lequel à partir des données de capteur du capteur radar (1) l'évolution d'au moins une délimitation de la chaussée est déterminée sur la base de caractéristiques décrivant la délimitation de la chaussée à partir de laquelle l'information de virage est déterminée, et les capteurs radar (1) sont configurés comme de capteurs radar à angle large (1) comportant respectivement un agencement d'antenne (5), dans lequel l'agencement d'antenne (5) permet une mesure d'angle dans au moins deux plans perpendiculaires l'un par rapport à l'autre, en particulier en azimut et en élévation, dans lequel plusieurs capteurs radar (1) dirigés sur l'avant du véhicule (10) avec au moins des zones de capture (11) se chevauchant partiellement sont utilisés, dont des données de capteur sont évaluées au moins dans la plage de chevauchement respective conjointement à la détermination de l'information de virage au moyen d'une combinaison des données de capteur à partir de la plage de chevauchement respective par rapport à une plausibilité réciproque et/ou en par rapport à un traitement statistique qui sert à augmenter la qualité des données, dans lequel les capteurs radar (1) orientés sur l'avant font partie d'un agencement de radar permettant une surveillance à 360° de l'environnement avec en particulier huit capteurs (1), dans lequel des données de capteur d'au moins un capteur radar (1) dirigé sur l'environnement latéral du véhicule (10) sont évaluées pour la détermination d'une information de distance par rapport à la délimitation de la chaussée, qui est prise en compte dans au moins l'un de l'au moins un critère de mesure.

2. Procédé selon la revendication 1,
**caractérisé en ce que**
grâce à la puce semi-conductrice (4) également une composante de traitement de signal (8) numérique et/ou une unité de commande (9) du capteur radar (1) sont réalisées et/ou la puce semi-conductrice (4) et l'agencement d'antenne (5) du capteur radar (1) sont réalisés comme un ensemble (6).

3. Procédé selon la revendication 1 ou 2,
**caractérisé en ce que**
le capteur radar (1) est actionné dans une plage de fréquences de 77 à 81 GHz et/ou avec une largeur de bande de fréquence de plus de 1 GHz, en particulier 4 GHz.

4. Procédé selon l'une quelconque des revendications précédentes,
**caractérisé en ce que**
des objets d'aménagement latéraux (19), en particulier des glissières de sécurité (20 et/ou des bordures (23) et/ou des balises et/ou des panneaux de signalisation et/ou des délinéateurs (21), et/ou une transition (18) du revêtement de chaussée, en particulier de l'asphalte, à un autre sol sont classifiés en tant que caractéristiques et localisés dans l'espace.

5. Procédé selon l'une quelconque des revendications précédentes,
**caractérisé en ce que**
un rayon de virage et/ou une courbure est déterminé(e) en tant qu'information de virage.

6. Procédé selon l'une quelconque des revendications précédentes,
**caractérisé en ce que**
dans le cadre d'au moins un critère de mesure, en particulier au moins en fonction de l'information de virage, de l'information de distance par rapport à la délimitation de chaussée et d'une vitesse actuelle du véhicule (10), une valeur de criticité décrivant la criticité de la situation de conduite actuelle par rapport au passage du virage (17) à venir est déterminée, une alerte étant émise à l'intention du conducteur lorsque cette valeur en tant que mesure est satisfaite et/ou un système de conduite, en particulier un système de freinage et/ou un système de sécurité est préconditionné et/ou au moins une intervention de conduite, en particulier pour réduire la vitesse est effectuée et/ou un système de conduite de véhicule, en particulier un système de guidage longitudinal est reparamétré.

7. Véhicule (10) présentant un système d'assistance du conducteur (15) comportant un appareil de commande (14) configuré pour la réalisation d'un procédé selon l'une quelconque des revendications précédentes.

8. Véhicule selon la revendication 7,
**caractérisé en ce que**
les capteurs radar (1) sont intégrés de façon cachée dans le véhicule.
